# EUROPEAN PATENT APPLICATION

(11) **EP 2 746 043 A1**
(43) Date of publication of application: **25.06.2014**
(21) Application number: 12198599.8
(22) Date of filing: 20.12.2012
(51) Int. Cl.: B32B 7/06, G09F 3/00, G09F 3/10

(54) **Dual Functional Layered Material**

(71) Applicant: 3M Innovative Properties Company, Saint Paul, MN 55133-3427 (US)
(72) Inventor: Griebenow, Yolanda, 41453 Neuss (DE); Buettner, Joern, 41453 Neuss (DE); Nguyen, Quoc-Hiep, 41453 Neuss (DE); Nguyen, Trung Kien, 41453 Neuss (DE); Neumann, Bernd, 41453 Neuss (DE)
(74) Representative: Gabriel, Kiroubagaranne

(57) **Abstract**

The present disclosure relates to layered material, comprising:
a) an ink receptive layer of a digital printable polymer comprising at least one pigment; and
b) an adhesive layer.
The present disclosure is also directed to a method of manufacturing a layered material for use in particular as a label, label stock, decorative or protective film, tamper evident and/or destructible label material.

## Description

### Technical Field

The present disclosure relates to layered materials and methods of making thereof. The disclosure is also related to the use of these layered materials as tamper evident materials, labels, label stocks, decorative or protective films.

### Background

Tamper evident labels or destructible labels are used as so called security labels in those applications where once adhered onto the desired substrate, the label shall not be removed without damage. Known tamper evident label materials or destructible label materials are for example polyvinyl chloride (PVC), polyethylene terephthalate, polyethylene, acetates and polyurethane-acrylates.

Label materials based on PET are known to provide very high tear resistance properties even laminated with high bon adhesives. To provide these PET-based materials with destructibility features, so-called security pre-cuts or voids have to be provided into the polymeric layer at converting process. The disadvantages of such pre-cut or voids is that the surface of the label is no longer smooth, with the consequence that other processing steps such as e.g. after print is not often possible.

Other label materials such as PVC, acetate and PU-acrylate provide insufficient chemical resistance to aggressive solvents, such as e.g. toluene, xylene and fuel. This requirement is particular important in the automotive industry, where security labels are used in the exterior area, and in particular in the vicinity of the engine or fuel tank, need to have a high solvent resistance.

In the automotive industry, security labels are used both in interior and exterior areas. Usually, different types of security labels are used for interior and exterior applications, and thereby security labels used for interior and exterior applications may not be based on a common label stock.

Without contesting the technical advantages associated with the solutions available in the art, there is still a need for a versatile layered material, useful as tamper evident label material, which may be printed by both conventional printing techniques and irradiation marking, and which additionally provides excellent mechanical properties, as well as excellent resistance to severe environmental conditions.

Other advantages of the layered material and methods of the invention will be apparent from the following description.

### Summary

According to one aspect, the present disclosure relates to a layered material, comprising:
a) an ink receptive layer of a digital printable polymer comprising at least one pigment; and
b) an adhesive layer.

According to another aspect, the present disclosure relates to a method of manufacturing a layered material as described above, which comprises the steps of:
a) providing an ink receptive layer of a digital printable polymer comprising at least one pigment; and
b) applying an adhesive layer onto the ink receptive layer, and optionally, covering the adhesive layer with a release liner.

In still another aspect, the present disclosure relates to the use of a layered material, as described above, in the preparation of an article selected from the group consisting labels, label stocks, signs, decorative or protective films, and any combinations thereof.

In the context of the present disclosure, it has been found that an ink receptive layer of a digital printable polymer comprising at least one pigment can not only be marked by digital printing, in particular an ink jet printer, but also by irradiation marking device, in particular a laser marking device. Therefore, one singly layered material can be used for different marking methods. This allows a simplification of logistics and a reduction of related costs. Moreover, it has been found that pigments can enhance the ink bonding properties of digital printable polymers, allowing the application of the layered material in harsher conditions.

It has furthermore been found that a polymer (layer) comprising the reaction product of the precursor mixture comprising, in particular from 20 wt% to 70 wt%, based on the total weight of the precursor mixture, of a hydroxy-functional polyester resin and a cross-linking agent, shows a high destructibility or frangibility at application. Therefore, such a polymer can be used as tamper evident and/or destructible and/or security label material. In addition, such a particular polymer has high resistance against aggressive solvents and fuels, such as toluene, xylene and E85. Therefore, such a polymer can also be used in exterior applications, in particular for exterior security labels in the automotive area. Moreover, it has been found that such a polymer is digital printable, in particular with printing techniques such as ink jet printing, screen printing, flexographic printing and thermal transfer printing. Finally, such a polymer may be applicable by casting methods. Therefore, the polymer comprising the reaction product of the precursor mixture described herein allows a simple and cost effective label preparation.

### Brief Description of the Figures

Figure 1 schematically represents one exemplary aspect of a single layered material according to the present disclosure.
Figure 2 schematically represents another exemplary aspect of a layered material according to the present disclosure, wherein a dual layered material is depicted.
Figure 3 schematically represents a third exemplary aspect of a layered material according to the present disclosure, wherein a single layered material which is submitted to ink jet printing and laser ablation is depicted.
Figure 4 schematically represents a fourth exemplary aspect of a layered material according to the present disclosure, wherein a dual layered material which is submitted to ink jet printing and laser ablation is depicted.

### Detailed description

Before any embodiments of this disclosure are explained in detail, it is to be understood that the disclosure is not limited in its application to the details of construction and the arrangement of components set forth in the following description. The invention described herein is capable of other embodiments and of being practiced or of being carried out in various ways. Also, it is to be understood that the phraseology and terminology used herein is for the purpose of description and should not be regarded as limiting. Contrary to the use of "consisting", the use of "including," "comprising," or "having" and variations thereof herein is meant to encompass the items listed thereafter and equivalents thereof as well as additional items. The use of "a" or "an" is meant to encompass "one or more". Any numerical range recited herein includes all values from the lower value to the upper value. For example, if a concentration range is stated as 1% to 50%, it is intended that values such as 2% to 40%, 10% to 30%, or 1.5 % to 3.9 %, etc., are expressly enumerated. These are only examples of what is specifically intended, and all possible combinations of numerical values between and including the lowest value and the highest value enumerated are to be considered to be expressly stated in this application.

The layered materials, labels and decorative or protective films as provided herein comprise an ink receptive layer (also referred herein as "top layer" or "single layer" or "multifunctional layer") of a digital printable polymer comprising at least one pigment.

The layered materials, labels and decorative or protective films may be a single layered material, which comprises a single layer arranged on the adhesive layer and being the top layer of the layered material. In particular, this single layer can support the layered material after removal of a release liner from the adhesive layer and before adhering the layered material to another object by the adhesive layer.

In the context of the present disclosure, a top layer may optionally comprise or be provided with an overcoat layer. The term top layer therefore does not exclude that the top layer may comprise or be provided with an overcoat layer.

In one particular aspect, the ink receptive layer is arranged on the adhesive layer and is the top layer of the layered material. The layered material may thereby in particular be a single layered material.

However, the layered material or label and decorative film may also be a multi layered material, which comprises a top layer and at least one further layer (also referred to herein as "base layer" and/or "intermediate layer") being arranged between the top layer and the adhesive layer of the layered material.

Thus, in another aspect, the ink receptive layer is the top layer of the layered material, wherein the layered material comprises at least one further layer, for example a base layer and optionally one or more intermediate layers, being arranged between the ink receptive layer and the adhesive layer of the layered material. The layered material may thereby be a multi layered material.

In particular, the layered material or label and decorative film may be a dual layered material, which comprises a top layer being arranged on a further layer (also referred to herein as "base layer"), which is arranged on the adhesive layer of the layered material.

In a further aspect, the ink receptive layer is the top layer of the layered material and is arranged on a further layer, in particular a base layer, which is arranged on the adhesive layer of the layered material.

The at least one pigment for use in the ink receptive layer can be any pigment well known to those skilled in the art. This renders the ink receptive layer, additionally to its digital printability, in particular ink jet printability, to be also markable by irradiation marking, in particular by laser marking, more in particular by laser ablation.

According to a particular aspect, the layered material, label, decorative or protective film is ink jet printable or ink jet printed and irradiation (e.g. laser) markable or irradiation (e.g. laser) marked by irradiation (e.g. laser) ablation.

The at least one pigment for use herein can for example be selected from the group consisting of inorganic pigments including metallic pigments or metallic flakes, such as aluminum flakes or particles, organic pigments, water-borne or solvent-borne inks or dyes, and/or inorganic microspheres and/or beads such as, for example, glass beads, and any combinations or mixtures thereof.

These additives may be selected so that the ablated areas become visually discernible from the surrounding non-ablated areas by the unaided eye under normal ambient light conditions. It is also possible that the additives are selected so that the ablated areas are visibly discernible when viewing them through magnifying glasses or a microscope, respectively, or upon irradiating the layered materials with UV light, IR light or viewing it under retroreflective lighting conditions.

The layered materials can for example be markable by laser irradiation with a Nd: YAG or Nd:YVO4 laser (e.g. 1064 nm wavelength) or also CO2 laser (10,64µm). Typically, a 10 µm thick polymeric layer may be completely ablated (i.e. having an ablation depth of 10 µm) using a laser at least 20 A, preferably at least 24 A, and at a frequency of 15 to 80 kHz using a laser speed of 1000 mm/s.

Laser irradiation may be used to create images or patterns displaying information. This pattern may generate an image or display information, for example if the pattern generated by the ablated areas is in the form of a series of letters, numbers, symbols, geometrical shapes or combinations thereof.

For example, the ink receptive layer can be partially ablated by a laser beam in order to create ablated and non-ablated areas, in particular a pattern of ablated and non-ablated areas. The patterns can be rendered visible or more visible by printing or coating ink on the (non-ablated) surface of the ink receptive layer.

Patterns may also be created by an arrangement of two or more layers. Thereby, areas of the ink receptive layer, and optionally one or more further layers underneath the ink receptive layer, can be ablated by a laser beam in order to create through-holes exposing areas of an underlying layer. Patterns can thereby be rendered visible by a color difference in between the ink receptive layer and the exposed underlying layer. The exposed underlying layer can be a further layer arranged between the ink receptive coating and the adhesive layer, for example a base layer arranged on the adhesive layer or another intermediate layer, or the adhesive layer itself.

Preferably, the further layer, for example base layer or intermediate layer, in particular to be exposed by laser ablation, is placed directly underneath the ink receptive layer, such that ablating parts of the ink receptive layer to a sufficient depth across the thickness of the ink receptive layer exposes the further layer, for example base layer or intermediate layer, underneath the ablated parts. However, it is also possible that the ink receptive layer is separated from the further layer by one or more transparent or colorless or colored intermediate layers. A black and white pattern can be generated for example, by using a white ink receptive layer and a black further layer, or a black ink receptive layer and a white further layer.

In one particular aspect, the at least one further layer, for example base layer or intermediate layer, comprises a coloring additive set, wherein the color of the at least one further layer, for example base layer or intermediate layer, comprising the coloring additive set is different from, in particular contrasting to, the color of the digital (e.g. ink jet) printable polymer of the ink receptive layer in the initial or rather non-laser-treated state. The at least one further layer thereby may have the same or a different polymer composition than the ink receptive layer but contain a different coloring additive set colored differently or otherwise visibly discernable from the ink receptive layer.

Moreover, when the ink receptive layer comprises electronically conductive materials or is electronically isolating and the through-holes are filled with an electronically conductive material, electronically readable devices may be generated, for example, electronically readable labels. They may also be suitable for the manufacture of optically or electronically readable articles, such as laser-markable identity cards, teller cards and the like.

According to one aspect, the digital (e.g. ink jet) printable polymer can comprise at least one non-color-changing pigment. Thereby, non-color changing is to be understood that the pigment keeps its initial color under irradiation (e.g. laser) treatment conditions.

Such non-color-changing pigments can be selected from inorganic pigments, for example, titanium dioxide, carbon black, vegetable black, iron oxide pigments, chromium oxide pigments including chromium oxide green, ultramarine blue, chrome green, phthalo chrome green, mixed metal oxide pigments, bi-vanadates or any mixtures or combinations thereof.

Commercially available inorganic pigments which are suitable for use in the layered materials include, for example, carbon black available as carbon black paste from Degussa, Germany. As a white colored pigment, titanium dioxide in silane modified form can be used (Kronos CL 2310, Kronos Titan, Leverkusen, Germany). Also, aluminum pigments (STAPA- Off-Set 3000, Eckhart-Werke, Fürth, Germany) can be used.

For example, partially metalized glass beads or a combination of glass beads which may or may not be metalized, with metal flakes exhibit retroreflective properties. The term "partially metalized glass beads" refers to glass beads 20 - 60 % of the surface of which are coated with a thin metal film which may be applied, for example, by CVD or PVD techniques. The use of glass beads which may or may not be aluminized in combination with aluminum and/or silver flakes or particles is preferred. Glass beads are preferably essentially spherical. Typically, the spheres have a diameter of between 40-60 µm.

Organic pigments include, for example, azo pigments, polycyclic pigments and metal complex pigments. Suitable azo pigments include, for example, monoazo yellow and orange pigments, disazo pigments, naphthol pigments, benzimidazolone pigments and disazo condensation pigments. Suitable polycyclic pigments include, for example, phthaiocyanine pigments, quinacridone pigments, peryiene and perinone pigments, thioindigo pigments, anthraquinone pigments, dioxazine pigments, isoindolinone and isoindoline pigments, diketopyrrolo pyrrole pigments, triaryicarbonium pigments and quinophthaione pigments, and any combinations or mixtures thereof.

Commercially available organic pigments include isoindolininone yellow commercially available as Cromophtal Yellow 2RLTS from Ciba; peryiene red commercially available as Irgazin Red BPTN from Ciba; pthalocyanine green, a halogenated Cu-phtalocyanine commercially available as Chomophtal Green GFN from Ciba; quinacridone violet commercially available as Cinquasia Violet RRT- 899D from Ciba; C. I. pigment red 178/71155 (Paliogen Red L3910 HD, BASF, Ludwigshafen, Germany); C. I. pigment yellow 110 (Irgazin Yellow 3RLT-N, Ciba- Geigy, Marienberg, Germany); and C. I. pigment blue 1511 , Heliogen Blue K6911 D, BASF, Ludwigshafen, Germany).

The use of the above-described pigments alone allows to provide a colored ink receptive layer, for example with white, black, grey or a chromatic color.

The layered material, label, decorative or protective film can according to this aspect be digital (e.g. ink jet) printable, irradiation (e.g. laser) markable by irradiation (e.g. laser) ablation.

In an exemplary aspect, the ink receptive layer may comprise a silver non-color-changing pigment and/or white non-color-changing pigment and/or black non-color-changing pigment.

In one further aspect, the at least one further layer, for example base layer or intermediate layer, comprises a coloring additive set, wherein the color of the at least one further layer, for example base layer or intermediate layer, comprising the coloring additive set is different from, in particular contrasting to, the color of the digital (e.g. ink jet) printable polymer of the ink receptive layer in the non-irradiation (e.g. laser)-treated state, and/or in irradiation (e.g. laser)-treated state, for example in the color-changed-irradiation (e.g. laser)-treated state.

For example, the at least one further layer may comprise a black and/or white non-color-changing pigment. Examples of suitable coloring additives are given below in the context of coloring additives.

Optionally, the ink receptive layer can comprise other coloring additives and pigments. These coloring additives and pigments can for example be down-converting pigments, up-converting pigments pearlescent pigments and other coloring additives. Examples of those coloring additives and pigments are given below in the context of coloring additives.

The ink receptive layer, and optionally the at least one further layer, may comprise an amount of from 2 to 70 pph, or from 2 to 50 pph (parts per hundred resin), with respect to the mass of the polymer of the layer, of pigments.

The pigments are typically present in particulate form and may be present as dispersion. The average size of the pigments can vary widely. Typically, the pigments have an average size (number average) of between 0.2 µm to 50 µm or even more. Titanium dioxide, for example, has a size of typically between 0.2 µm and 1 µm whereas red iron oxide has typically has an average size of between 0.3 µm and 3 µm. The average size of metal particles and flakes typically is between 3 µm and 25 µm, and glass beads have a typical average size of 40 µm and 60 µm. The person skilled in the art, in the light of the present description, will easily select the appropriate thickness of the polymeric layer(s) in view of the respective average size of the pigments used.

It is to be understood that although the layered materials provided herein, are easily markable by digital (e.g. ink jet) printing and by irradiation (e.g. laser) treatment, the materials may also be marked, alternatively or in addition to digital (e.g. ink jet printing, laser toner printing, thermal transfer printing) and irradiation (e.g. laser) marking, by other methods, including but not limited to, other printing techniques, such as flexo printing, screen printing, etching, engraving, molding, foaming and the like.

The ink receptive layer can for example have a thickness in a range from 5 µm to 25 µm, or even from 5 µm to 15 µm, for example a thickness of about 10 µm.

Preferably, the digital printable polymer is ink jet printable, in particular UV-LED ink jet printable. This allows to provide a UV LED ink jet printable or printed label or decorative foil.

The digital (e.g. ink jet) printable polymer can be formed of a water- or solvent-based polymer solution. By such a solution a thin solid polymer coating can be formed after drying. The water- or solvent- based polymer solution can comprise at least one surfactant, for example polyethylene glycol (PEG).

For example the digital (e.g. ink jet) printable polymer is selected from cross-linked or non-cross-linked polyester resins, polyurethane resins, polyester urethane resins, polyvinylbutyral resins, acrylic resins, methacrylic resins, polyvinyl chloride resins, acrylic-resin-methacrylic-resin-copolymers and any combinations or mixtures thereof.

The digital (e.g. ink jet) printable polymer of the ink receptive layer and/or the at least one further layer may comprise a polymer reaction product of a precursor mixture comprising at least one hydroxy-functional polyester resin. For example, the ink jet printable polymer comprises the polymer reaction product of a precursor mixture, comprising from 20 wt% to 70 wt%, based on the total weight of the precursor mixture, of at least one hydroxy-functional polyester resin.

Preferably, the precursor mixture thereby comprises at least one cross-linking agent. Preferably, the cross-linking level is greater than or equal to 25 wt%. For example, the weight ratio between the at least one cross-linking agent and the at least one hydroxy-functional polyester resin is greater than or equal to 1/4, in particular based on the weight of the at least one cross-linking agent and of the at least one hydroxy-functional polyester resin without solvents. The polymer of the ink receptive layer and/or the at least one further layer can thereby be identical or different. Detailed information on such polymers are given below.

The ink receptive layer and/or the at least one further layer can be a cast polymer layer. For example the digital (e.g. ink jet) printable polymer can be a cast polyester (based) polymer layer.

The digital (e.g. ink jet) printable polymer can also comprise a polyester urethane resin, for example obtainable by a precursor mixture comprising at least one, in particular, aliphatic diisocyanate, for example isophorone diisocyanate, at least one dicarboxylic acid, for example adipic acid, at least diole, for example hexane diole, neopenyl glycol. Such precursor mixtures are commercially available under the trade name "Print Rite DP Digital Print Coatings", in particular "Print Rite KK 25/163" by Lubrizol (UK).

The digital (e.g. ink jet) printable polymer can also comprise an acrylic resin, a methacrylic resin, an acrylic-resin-methacrylic-resin-copolymer or a mixture thereof. For example, the digital (e.g. ink jet) printable polymer can comprise a poly(n-buty)acrylate-poly(methyl)methacrylate-copolymer (PBA-PMMA-copolymer). For example, the digital (e.g. ink jet) printable polymer can comprise a self-cross-linking acrylic copolymer. Suitable polymeric compounds are commercially available under the tradename "MFR 1924" by Michelman, USA, and under the tradename "Neocryl A-1127" by DSM NeoResins, The Netherlands. For example, the digital (e.g. ink jet) printable polymer can be obtainable by a precursor mixture comprising at least one hydroxyl-functional acrylic resin and at least one, in particular aminofunctional/aminoplast, cross-linking agent.

The layered materials provided herewith may further comprise a release liner. The release liner can be arranged on the adhesive layer, in particular opposite to a layer, which may be the ink receptive layer or one of the further layers, in particular the base layer. The release liner can protect the adhesive layer and may be advantageously removed before affixing the material to an article by its adhesive layer.

The layered materials provided herewith may be labels, decorative or protective films or label stocks, or may be used in the preparation of labels, decorative or protective films or label stocks. In particular, the layered material can be a tamper evident and/or destructible and/or security label, or may be used in the preparation of a tamper evident and/or destructible and/or security label. Possible application areas are explained in detail below. The layered material may be in form of a sheet, in particular a wound up in a roll.

The labels provided herewith can be tamper evident and/or destructible and/or security labels.

The article provided herewith to which the layered material or label or a decorative or protective film has been adhered can contain laser-ablated areas. The article can for example be selected from fuel managing systems, engines, fuel reservoirs, bodies of vehicles or a component thereof.

Labels as referred to herein are individual pieces of layered material containing a polymer layer and an adhesive layer which allows the layered material to be affixed to an article and wherein the polymer layer displays information, such as for example identification of a product, person, manufacturer, proprietor and the like, warnings, instructions and the like.

The individual pieces can be of any shape but typically are of elongated shape or sheet like with the top surface made up by the polymeric layer and the bottom surface being made up by the adhesive layer. Labels typically may have a thickness of up to 5000 microns, or up to 3000 microns, or up to 1000 microns, or up to 500 microns, or even up to 200 microns. The materials provided herewith may be used in labels having a thickness of up to 2000 microns, or up to 1000 microns, or up to 500 microns or even up to 200 microns.

If a multi-layer construction is used, by which is meant that a construction is used having a base layer and at least one top layer, the base layer may typically have a thickness of from about 30 µm to about 300 µm, or even from about 30 µm to 150 µm.

The top layer of the layered material typically has a thickness of from about 5 µm to about 20 µm. The top layer can be the layer onto which a pattern is typically created, for example by removing parts of the layer, like for example by ablation through irradiation, etching, molding, foaming or engraving. It is to be understood that also thicker top layers may be used. This may then require more energy to create a pattern than in a thinner top coat.

The adhesive layer for use herein may typically have a thickness of from about 10 µm to about 300 µm.

As will be easily apparent to those skilled in the art, in the light of the present disclosure, the thickness of the individual layers can be adjusted to meet the desired requirements of the label.

The layered materials can further comprise a so-called overcoat layer covering the ink receptive layer from the outside. The overcoat layer may or may not be removable from the ink receptive layer. It may be used to protect the ink receptive layer or to add further information which could be displayed by the layered material when used as label or decorative film, for example by providing one or more layer containing an emblem or in-mold logo as described, for example, in international patent application WO 2008/024693 (Nguyen et al.) incorporated herein by reference.

For example, the layered material may contain one or more overcoat layers displaying the name of a user of the label stock (i.e. the material to be converted into a label by creating the information to be displayed on the layered material). The user may then treat the label stock by laser irradiation to create the information-displaying pattern on the layered material to make the labels. The overcoat layers may be of the same or different chemical composition than the ink receptive layer. The overcoat layers may be clear or (partially) colored or emblem-carrying, for example displaying a logo or other types of information or decoration. Such overcoat layer may also or alternatively be placed between top layer and base layer. This way a 3D-like image or pattern may be generated, for example a manufacturer's logo may be displayed by the overcoat layer and specific information relating to use or instructions are generated through laser ablation of the top coat and exposing the differently colored base coat at areas where the overcoat is transparent. Such overcoat layers may typically have a thickness of from about 1 µm to about 50 µm or from about 20 µm to about 50 µm.

In the context of the present disclosure, it has been found that the digital printable polymer may be provided with high destructibility/frangibility and high solvent resistance, by specific use of a hydroxy-functional polyester resin in combination with a cross-linking agent. In that context, it has been found that the cross-linking agent itself is not solely responsible for the special characteristics, e.g. high destructibility/frangibility and high solvent resistance, of the polymer reaction product of a suitable precursor mixture the digital printable polymer (layer), but that a large proportion of polyester in combination with the cross-linking agent is important to achieve the special characteristics. Additionally, such a polymer can be produced cost effectively.

Accordingly in particular aspect, the digital printable polymer comprises the polymer reaction product of a precursor mixture, comprising from 20 wt% to 70 wt%, based on the total weight of the precursor mixture, of at least one hydroxy-functional polyester resin and at least one cross-linking agent.

In a typical aspect, the precursor mixture of the polymer reaction product comprises at least 25 wt%, at least 30 wt%, or at least 40 wt%, of a hydroxy-functional polyester resin. In another typical aspect, the precursor mixture of the polymer reaction product comprises up to 60 wt%, up to 50 wt%, or even up to 40 wt%, of a hydroxy-functional polyester resin.

According to a more typical aspect, the precursor mixture of the polymer reaction product comprises from 20 wt% to 60 wt%, from 25 wt% to 50 wt%, or even from 30 wt% to 40 wt% of a hydroxy-functional polyester resin. The precursor mixture of the polymer reaction product may in particular comprise from 30 wt% to 40 wt% of a hydroxy-functional polyester resin.

According to particular aspect, the precursor mixture comprises at least 5 wt%, at least 10 wt%, or even at least 15 wt% of a cross-linking agent. Without wishing to be bound by theory, it is believed that a relatively high cross-linking level of a relatively large proportion of a hydroxy-functional polyester resin may advantageously affect the solvent resistance and destructibility properties of the resulting polymer layer of the layered material of the present disclosure. It is further believed that the destructibility/frangibility properties of the resulting polymer layer may thereby be enhanced.

In a particular execution of the layered material of the disclosure, the precursor mixture comprises from 5 wt% to 40 wt%, from 10 wt% to 35 wt%, from 15 wt% to 30 wt%, or even from 15 wt% to 25 wt% of a cross-linking agent.

Advantageously, the weight ratio between the cross-linking agent and the hydroxy-functional polyester resin is of at least 1:5, at least 1:4, at least 1:3 or even at least 1:2.

In an exemplary aspect, the weight ratio between the cross-linking agent and the hydroxy-functional polyester resin is greater than or equal to 25 %, greater than or equal to 35 % or even greater than or equal to 40 %. For example, the weight ratio between the cross-linking agent and the hydroxy-functional polyester resin is up to 65 %, up to 60 % or even up to 55 %.

As will be apparent to those skilled in the art, in the light of the present description, the precursor mixture may comprise further functionalized resins. However, in special aspects the precursor mixture is free of hydroxyl functional acrylic resins and/or polyvinyl butyral. In a more special aspect, the precursor mixture or rather the polymer is free of other hydroxyl functional resins than hydroxy-functional polyester resins.

According to particular aspect, the precursor mixture comprises less than 35 wt%, less than 30 wt%, less than 20 wt%, less than 15 wt%, less than 10 wt%, less than 5 wt%, or even less than 1 wt% of any hydroxy-functional acrylic resin. More typically, the precursor mixture is substantially free of any hydroxy-functional acrylic resin.

The polymer reaction product of the precursor mixture may typically be a cast polymer, in particular a cast polyester (based) polymer.

The polymer reaction product of the precursor mixture as described above is also particularly suitable for the forming of the so-called "base layer" and/or "intermediate layer" referred to herein.

The polymer reaction product of the precursor mixture can be used in the preparation of a label or a decorative film or a protective film. In particular the polymer reaction product of the precursor mixture can be used for the preparation of tamper evident and/or destructible and/or security labels.

At least one of the mentioned above pigments or pigment mixtures can be added to the precursor mixture for the preparation of a tamper evident and/or destructible label material.

Possible application areas for the layered material, the label and the tamper evident and/or destructible label material can be a halogen-free and destructible label for the Electronics and Retail Market, TÜV-sticker, technical and/or security label for Automotive Industry, e.g. VIN-label, security label, sealing label, technical label for high speed ink-jet, destructible label for laser toner print, tamper evident label, hologram label with destructible properties, durably destructible laminating, label for Aerospace.

Layered materials according to the present disclosure may also be advantageously be used for the manufacture of optically readable articles, such as laser-markable identity cards, teller cards and the like.

Hydroxy-functional polyester resins for use herein may include any polyester having at least one hydroxy-functional groups. The hydroxy-functional polyester resin may be a saturated or unsaturated polyester resin, an alkyd resin, a polycarbonate or a polylactone, preferably a saturated polyester resin or a polylactone, more preferably a saturated polyester resin.

Saturated hydroxy-functional polyester resins, also oil-free alkyd resins, which include branched or non-branched aliphatic polyester diols or polyols, may be produced by polycondensation of polyols with poly-functional, saturated carboxylic acids or acid anhydrides. Unsaturated hydroxy-functional polyester resins may be based on polycondensation products of mixtures of poly-functional carboxylic acids or acid anhydrides, in which one compound is unsaturated, and diols or polyols.

Alkyd resins may be based on polycondensation products of mixtures containing poly-functional, saturated or unsaturated carboxylic acids or acid anhydrides, diols or polyols and saturated or unsaturated fatty acids or oils, such as triglycerides. Polycarbonate may be prepared by the reaction of diols with phosgene. Polylactones, e.g. polycaprolactones, can be produced by the polyaddition of caprolactone to diols.

Suitable diols and polyols include ethylene glycol, 1,2- propane diol, diethylene glycol, 2-methyl 2-ethyl 1,3 propane diol, 1,4-butane diol, 1,6-hexane diol, neopentyl glycol, trimethyl pentane diol, 1,4-cyclohexane dimethanol, tricylcodecane dimethanol, trimethylol propane, glycerol, hydroxypivalic acid neopentyl glycol ester, pentaerythritol, dipentaerythritol, hydrogenated bisphenol A, bisphenol A-bis-hydroxyethylether, caprolactonediol and similar compounds. Suitable saturated carboxylic acids include isophthalic acid, terephthalic acid, hexahydroterephthalic acid, 5-tert-butylisophthalic acid, adipic acid, azelaic acid, sebacic acid, glutaric acid, chlorendic acid and similar compounds, while suitable saturated acid anhydrides include phthalic anhydride, hexahydrophthalic anhydride, tetrahydrophthalic anhydride, trimellitic anhydride, pyromellitic anhydride and similar compounds. Suitable unsaturated acid components include maleic acid, fumaric acid and their anydrides and Diels-Alder adducts made from maleic anhydride and cyclopentadiene.

The polyesters typically have an average molecular weight of 10,000 to 40,000 g/mol. The average molecular weight preferably is the weight average molecular weight. It can be measured by GPC (gel permeation chromatography).

The hydroxy-functional polyester resins typically have a hydroxyl value of between 20 and 45 mg KOH/g. The hydroxyl-functional polyesters may have an acid value between about 6 and about 20 mg KOH/g.

The degree of cross-linking and the flexibility of the polymeric layered product can be in part adjusted by the initial hydroxy content of the hydroxy-functional polyester applied in the precursor mixture and can be adapted to the desired end use of the films. Cross-linking may be achieved by using the cross-linking agents as described below.

Any cross-linking agent known for cross-linking resins containing OH-groups may be used in the context of the present disclosure. Suitable cross-linking agents for use herein may be easily identified by those skilled in the art, in the light of the present disclosure.

Exemplary cross-linking agents for use herein include, but are not limited to, triazines and triazine resins, aziridines, isocyanates, peroxides, amines and any combinations or mixtures thereof. Such cross-linking agents include isocyanates, such as aliphatic diisocyanates or blocked isocyanates. The isocyanate moiety is transformed with suitable blocking agents into another moiety which can be regarded as a latent isocyanate group. Suitable blocking agents are, for example, those that unblock at elevated temperatures, thus generating again the isocyanate group.

In a particular aspect, the cross-linking agent is an amino-functional cross-linking agent or so called aminoplast cross-linking agent, which is preferably selected from the group consisting of triazines and triazine resins, aziridines, isocyanates, peroxides amines and any combinations or mixtures thereof.

Preferably, the cross-linking agent selected from triazines and triazine resins, urea-formaldehydes and urea-formaldehyde resins, cyanamides and cyanamide resins, glycoluril resins and mixtures thereof. Preferably, the cross-linking agent is a triazine or a triazine resin. More preferably, the cross-linking agent is a triazine or triazine resin selected from the group consisting of melamine or melamine resins, guanamine or guanamine resins and mixtures thereof. Guanamine resins include benzoguanamine resins. Most preferred are melamines or melamine resins as the cross-linking agent.

Suitable melamine resins include melamine-formaldehyde resins, alkylated melamine-formaldehyde resins and mixtures thereof. Alkylated melamine-formaldehyde resins include methylated and/or butylated melamine-formaldehyde resins having a high degree of alkylation.

Alkylated melamine-formaldehyde resins such as methoxymethyl butoxymethyl melamine resin, methoxymethyl isobutoxymethyl melamine resin, hexamethoxy methyl melamine resin, methoxy ethoxy melamine-formaldehyde resin and mixtures thereof, have been found suitable as cross-linking agent for use herein.

In a particular execution, the cross-linking agent is a an alkylated melamine-formaldehyde resin, preferably a methylated melamine-formaldehyde resin having in particular a low degree of alkylation and/or a high imino functionality. Imino-functional methylated melamine formaldehyde resins, in particular highly imino-functional, in particular highly reactive, methylated melamine formaldehyde resins, have been found to be particularly suitable as cross-linking agent.

In a particular execution, the precursor mixture for use herein may comprise only one cross-linking agent.

The polymeric material for use herein may advantageously contain optional ingredients such as e.g. coloring additives, glass flux, solvents, wetting additives and catalysts.

The layered material may comprise one or more additives which may in particular render the ablated areas more visually discernable from the non-ablated areas.

Such additives comprise, in particular, coloring agents such as inorganic pigments including metallic pigments or metallic flakes, such as aluminum flakes or particles, organic pigments, water-borne or solvent-borne inks or dyes, and/or inorganic microspheres and/or beads such as, for example, glass beads. These additives may be selected so that the ablated areas become visually discernible from the surrounding non-ablated areas by the unaided eye under normal ambient light conditions.

It is also possible that the additives are selected so that the ablated areas are visibly discernible when viewing them through magnifying glasses or a microscope, respectively, or upon irradiating the layered materials with UV light, IR light or viewing it under retroreflective lighting conditions. For example, partially metalized glass beads or a combination of glass beads which may or may not be metalized, with metal flakes exhibit retroreflective properties. The term "partially metalized glass beads" refers to glass beads 20 - 60 % of the surface of which are coated with a thin metal film which may be applied, for example, by CVD or PVD techniques. The use of glass beads which may or may not be aluminized in combination with aluminum and/or silver flakes or particles is preferred. Glass beads are preferably essentially spherical. Typically the spheres have a diameter of between 40-60 µm.

Inorganic pigments may also be suitable and include, for example, titanium dioxide, carbon black, vegetable black, iron oxide pigments, chromium oxide pigments including chromium oxide green, ultramarine blue, chrome green, phthalo chrome green, mixed metal oxide pigments, bi-vanadates, and any combinations of mixtures thereof.

Organic pigments include, for example, azo pigments, polycyclic pigments and metal complex pigments. Suitable azo pigments include, for example, monoazo yellow and orange pigments, disazo pigments, naphthol pigments, benzimidazolone pigments and disazo condensation pigments. Suitable polycyclic pigments include, for example, phthalocyanine pigments, quinacridone pigments, peryllene and perinone pigments, thioindigo pigments, anthraquinone pigments, dioxazine pigments, isoindolinone and isoindoline pigments, diketopyrrolo pyrrole pigments, triarylcarbonium pigments and quinophthalone pigments.

Commercially available inorganic pigments which are suitable for use in the layered materials include, for example, carbon black available as carbon black paste from Degussa, Germany. As a white colored pigment, titanium dioxide in silane modified form can be used (Kronos CL 2310, Kronos Titan, Leverkusen, Germany). Additionally, aluminum pigments (STAPA- Off-Set 3000, Eckhart-Werke, Fürth, Germany) may advantageously be used.

Commercially available organic pigments or dyes include isoindolininone yellow commercially available as Cromophtal Yellow 2RLTS from Ciba; perylene red commercially available as Irgazin Red BPTN from Ciba; pthalocyanine green, a halogenated Cu-phtalocyanine commercially available as Chomophtal Green GFN from Ciba; quinacridone violet commercially available as Cinquasia Violet RRT- 899D from Ciba; C. I. pigment red 178/71155 (Paliogen rot L3910 HD, BASF, Ludwigshafen, Germany); C. I. pigment yellow 110 (Irgazin gelb 3RLT-N, Ciba- Geigy, Marienberg, Germany); and C. I. pigment blue 1511 , Heliogen blau K6911 D, BASF, Ludwigshafen, Germany); Lumogen Black FK 4280, Lumogen Black FK 4281, BASF, Ludwigshafen, Lumogen F Green 850, BASF, Ludwigshafen, Lumogen F Red 305, BASF, Ludwigshafen Lumogen IR 765, BASF, Ludwigshafen.

Pearlescent pigments that subtly change color as the viewing angle is changed can be obtained, for example, from Merck KGaA, Darmstadt, Germany, under the Iriodin trade designation.

Liquid crystal polymer additives which change color when the viewing angle is changed are also suitable and can be obtained from, for example, Wacker Chemie of Munich, Germany. It is also possible to use up-converting pigments, down-converting pigments or a combination thereof.

Down-converting pigments are pigments that emit UV light upon absorption of light from the visible spectrum. Preferred are down-converting pigments having an average particle size greater than 1 µm or greater than 1.5 µm. An example of a down converting additive which is invisible under ambient light but visible under UV light is Black Light Varnish available from Wernecke of St. Paul, MN, USA. Other examples are fluorescent or phosphorescent pigments such as rare earth metals or rare earth metal oxides, e.g. neodymium oxides. A suitable fluorescent pigment is available from Honeywell under the trade designation Lumilux Effect Blue SN. Examples of phosphorescent pigments include the Lumilux Phosphorescent pigments series available from Honeywell such as those available under the trade designation Luminux green SN-F5, Lumilux Green N5 or Lumilux C-Pigments.

Exemplary up-converting (anti-stoke's) pigments are materials capable of emitting electromagnetic radiation of greater energy upon absorption of electromagnetic radiation of lower energy. For example, the up-converting pigments may be capable of absorbing infrared radiation and emitting radiation in the visible spectrum (e.g. from about 400 nm up to less than 700 nm wavelength), e.g. pigments that emit green light upon irradiation with infrared light (e.g. radiation of from about 700 to about 1300 nm wave length). It is also possible to use an up- converting pigment which is excited by electromagnetic radiation of the visible spectrum and emits UV light (e.g. radiation of a less than 400 nm up to less than 250 nm wave length). Up-converting pigments are typically inorganic materials doped with erbium (Er), yterbium (Yb) or thulium (Tm), such as for example rare earth metal fluorides doped with rare earth metals or metal ions, such as for example Y^{b3+}, Er³⁺, Tm³⁺, Nd³⁺, Ho³⁺, although crystals doped with ions of some transition metals, e.g. Ti²⁺, Ni³⁺, Mo³⁺ or Re⁴⁺ have also been used in the fabrication of up-converting pigments. Typical examples of up-converting pigments correspond to the general formula Nal_nF4: Yb³⁺, Er³⁺ with Ln typically being Y, Gd or La. A particular example is NaYO.57,YbO.39, ErO.39F4. Other examples include oxysulfide doped with rare metals corresponding to the general formula M₂O₂S: Yb, Tm, Er with M being a lanthanoid or Y, Sc such as for example Gd₂O₂S: Yb, Tm, Er or Y₂O₂S₂: Yb, Tm, Er. Other examples of crystals that may be doped with such ions include manganese halides and tungstate crystals such as RbMnCl₃, CsMnCl₃, CsMnBr₃, Rb₂MnCl₄ or NaY(WO₄)₂. Examples of suitable up-onverting nanopowders include Al₂O₃ or yttrium aluminum garnet doped with Nd³⁺ or Ce³⁺. Preferably, the up-converting pigments are crystalline.

The coloring agents are typically present in particulate form and may be present as solution or dispersion. The average size of the coloring agents can vary widely. Typically, the coloring agents have an average size (number average) of between 0.2 µm and 50 µm or even more. Titanium dioxide, for example, has a size of typically between 0.2 µm and 1 µm, whereas red iron oxide has typically has an average size of between 0.3 µm and 3 µm. The average size of metal particles and flakes typically is between 3 µm and 25 µm, and glass beads have a typical average size of between 40 µm and 60 µm. The person skilled in the art will easily select the appropriate thickness of the polymeric layer(s) in view of the respective average size of the coloring agents used.

In one aspect, the coloring additives are those which exhibit a color change upon irradiation with an energy source other than visible light, e.g. UV light (e.g. down-converting pigments) IR- light (e.g. up-converting pigments) or laser marking. In some executions, the one or more additives included into the polymeric layer of the layered material are present in an amount of from between 2 pph and 70 pph, and, in some embodiments, between 2 pph and 50 pph (parts per hundred resin) with respect to the mass of the polymer layer.

Any wetting agents know to those skilled in the art, in the light of the present disclosure, may be used herein. Suitable wetting agents may support the casting performance of the layers and the formation of a uniform and smooth surface without surface defects and/or pinholes. Suitable wetting agents include acrylate-based polymers, for example, an acrylate-based wetting agent under the trade designation DISPARLON L 1980 from Kusomoto, Japan. The wetting agent can be present in amounts from 0.1 wt% to 2.0 wt%, based on total weight of the polymer layer. Further wetting agent include fluorinated surfactants, fluorinated hydrocarbons and the like.

Catalysts may be used to promote cross-linking reactions of the cross-linking agent with the hydroxy-functional polyester resins or other polymeric resins. Suitable catalysts include, but are not limited to, alkyl acid phosphates, phosphoric acid, maleic acid and anhydride, fumaric acid, chloromaleic acid and anhydride, alkyl acid phthalates, monoalkyl succinates and maleates. Catalysts which have been found to be particularly suitable are compounds such as sulfonic acids and derivatives thereof including, for example p-toluene sulfonic acid, methyl-p-sulfonic acid dodecyl benzene sulfonic acid and the like, tin(II)salts, for example but not limited to DBTL (di-butyl tin laurate) or tin(II) ethylhexanoate. Catalysts may be present in amounts from 0.1 wt% to 1.0 wt%, based on total weight of the polymer layer.

The skilled person will easily apprehend that for adjusting characteristic properties layered materials and for economical reasons fillers, e.g. mica, calcium carbonate kaolin, may be used in preparing the layered materials and may be present in the layers. Further adjuvants include, for example but not limited to, UV-absorber (for example those available under the trade designation Tinuvin Uvinul) and antioxidants (for example, but not limited to those available under the trade designation Irganox).

Any adhesive layer well know to those skilled in the art may be used in the context of the present disclosure. The adhesive layer may contain one or more adhesives. Preferably, the adhesives are pressure sensitive adhesives or heat-activatable adhesives. These may comprise adhesives based on polyacrylates, polyesters, polyolefins, polyamides, polyurethanes, silicone polymers, polybutadiene and copolymers, polyisoprenes and copolymers, natural and synthetic rubber as well as hydrogenated derivatives thereof with and without resins, fillers and cross-linking agents.

Polyacrylates have also proven to be useful, particularly those which have been modified for use on a variety of surfaces having very different surface energies, such as steel/polyethylene. Useful alkyl acrylates (i.e. acrylic acid alkyl ester monomers) for the preparation of polyacrylates include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate.

Particularly preferred are acrylate based pressure-sensitive adhesive materials such as copolymers of isooctyl acrylate and acrylic acid like those disclosed in U.S. Patent No. 2,884,126, incorporated herein by reference. The adhesive layer may have a thickness of from about 5 µm to about 300 µm, preferably from about 10 µm to about 60 µm.

The pressure-sensitive adhesives which are particularly preferred are tackified or non-tackified isooctyl acrylate and acrylic acid copolymers. The copolymers are preferably employed in amounts ranging from 50 wt% to 70 wt% and preferably in an amount of about 60 wt%. As the tackifying resin, is preferably used Foral 85 (company Hercules), a hydrogenated rosin or its glycerol or pentaerythritol esters in amounts of preferably 30 to 50 % and particularly preferred of about 40 % by weight. Antioxidants in amounts of about 1% and crosslinkers such as for example aziridine compounds may also be present in the adhesive layer.

The adhesive layer may be protected from the outside by a release liner. The release liner is preferably adhesive-repellent and more specifically comprises paper or film which has been coated or modified with compounds of low surface energy relative to the adhesive applied. Organo silicone compounds, fluoropolymers, polyurethanes and polyolefins can serve this purpose. The release liner may also be a polymeric sheet produced from polyethylene, polypropylene, PVC, polyesters with or without the addition of adhesive-repellant compounds. The release liner may have a thickness of from about 10 µm to about 250 µm, preferably from about 30 µm to about 120 µm.

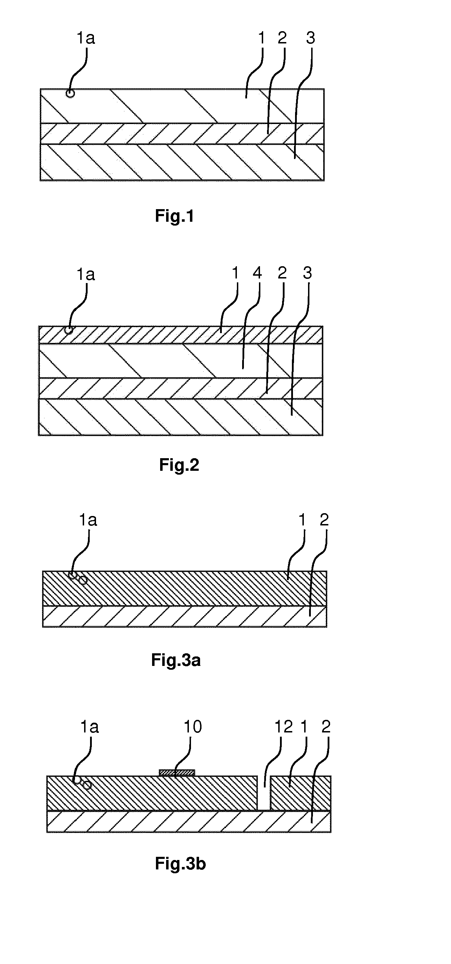

Figures 1 to 4b show exemplary aspects of the present invention.

In the aspect illustrated in Figure 1, the layered material is a single layer layered material comprising an ink receptive layer **1** of a digital (e.g. ink jet) printable polymer comprising at least one pigment **1a** and an adhesive layer **2.** The ink receptive layer **1** is adjacently arranged on the adhesive layer **2** and is likewise the top layer of the single layer layered material. The adhesive layer **2** is adjacently arranged on a release liner **3.**

In the aspect illustrated in Figure 2, the layered material is a dual layer layered material comprising an ink receptive layer **1** of a digital (e.g. ink jet) printable polymer comprising at least one pigment **1a** and an adhesive layer **2.** Thereby, the ink receptive layer **1** is the top layer of the layered material, wherein the layered material comprises a base layer **4** being arranged between the ink receptive layer **1** and the adhesive layer **2** of the layered material. In particular, the ink receptive layer **1** is adjacently arranged on the base layer **4** and the base layer **4** is adjacently arranged on the adhesive layer **2** of the layered material. The adhesive layer **2** is adjacently arranged on a release liner **3.**

In the aspects illustrated in Figure 1 and 2, the digital (e.g. ink jet) printable polymer comprises at least one non-color-changing pigment **1a.**

The functionally of one aspect of a single layered material being digital (e.g. ink jet) printable and markable by laser ablation, is explained on the basis of Figures 3a and 3b.

Figure 3a shows a single layered material comprising an ink receptive layer 1 of a digital (e.g. ink jet) printable polymer comprising at least one non-color-changing pigment **1a.** The ink receptive layer 1 is adjacently arranged on the adhesive layer **2** and is likewise the top layer of the single layer layered material.

Figure 3b shows that the single layered material of Figure 3a after being ink jet printed **10** and marked by laser ablation **12.** Figure 3b illustrates that the ink receptive layer 1 was printed **10** by an ink jet printer. Furthermore, Figure **3b** shows that an area of the ink receptive layer **1** was laser ablated **12** in such a way that the adhesive layer **2** positioned underneath the ink receptive layer **1** is exposed.

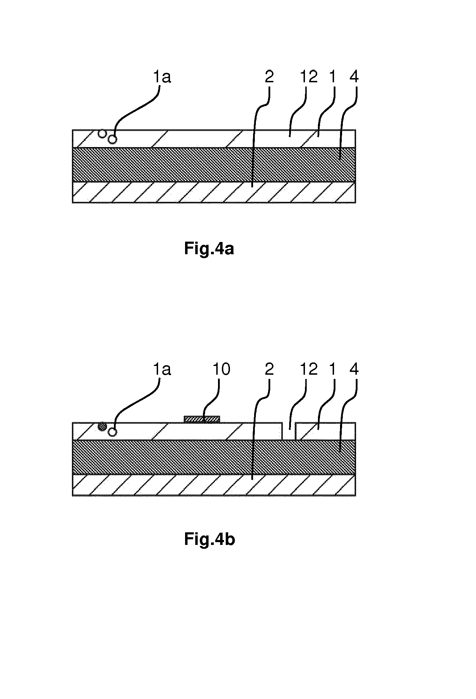

The functionally of one aspect of a dual layered material being digital (e.g. ink jet) printable and markable by layer ablation, is explained on the basis of Figures 4a and 4b.

Figure 4a shows a dual layer layered material comprising an ink receptive layer **1** of a digital (e.g. ink jet) printable polymer comprising at least one non-color-changing pigment **1a.** The ink receptive layer **1** is adjacently arranged on a base layer **4.** The base layer **4** is adjacently arranged on the adhesive layer **2.** The base layer **4** has a dark color, for example black, which is contrasting to the color of the ink receptive layer **1** in its initial, non-laser-treated state. The ink receptive layer **1** can have in its initial, non-laser-treated state a moderate to light color, for example silver or white, given by the pigment **1a.**

Figure 4b shows that the dual layered material of Figure 4a after being ink jet printed **10** and marked by laser ablation **12.** Figure 4b illustrates that the ink receptive layer **1** was printed **10** by an ink jet printer. Furthermore, Figure 4b shows that an area of the ink receptive layer **1** was laser ablated **12** in such a way that the base layer **2** positioned underneath the ink receptive layer **1** is exposed. Thereby, the contrasting colors of the base layer **4** and the ink receptive layer **1** provides a good visibility of the laser ablated area **12.**
Item 1 is a layered material, comprising:
   a) an ink receptive layer of a digital printable polymer comprising at least one pigment; and
   b) an adhesive layer.
Item 2 is the layered material of item 1, wherein the digital printable polymer is printable by any printing technique selected from the group of ink-jet printing, laser toner printing, thermal transfer printing, and any combinations thereof.
Item 3 is a layered material according to any of item 1 or 2, wherein the digital printable polymer is an ink-jet printable polymer.
Item 4 is a layered material according to any of the preceding items, wherein the ink receptive layer is digital printable or digital printed and irradiation markable or irradiation marked.
Item 5 is a layered material according to item 4, wherein the ink receptive layer is irradiation markable or irradiation marked by irradiation ablation, and wherein the irradiation is preferably laser irradiation.
Item 6 is a layered material according to any of the preceding items, wherein the digital printable polymer comprises at least one non-color-changing pigment.
Item 7 is a layered material according to any of the preceding items, wherein the ink receptive layer is arranged on the adhesive layer and is likewise the top layer of the layered material.
Item 8 is a layered material according to any of the preceding items, wherein the ink receptive layer is the top layer of the layered material, wherein the layered material comprises at least one further layer being arranged between the ink receptive layer and the adhesive layer of the layered material.
Item 9 is a layered material according to item 8, wherein the ink receptive layer is arranged on a further layer being arranged on the adhesive layer of the layered material.
Item 10 is a layered material according to any of item 8 or 9, wherein the at least one further layer comprises a coloring additive set, wherein the color of the at least one further layer comprising the coloring additive set is different from the color of the digital printable polymer of the ink receptive layer in the non-irradiation-treated state and/or in the irradiation-treated state.
Item 11 is a layered material according to item 10, wherein the irradiation is laser irradiation.
Item 12 is a layered material according to any of the preceding items, wherein the digital printable polymer is UV-LED ink jet printable.
Item 13 is a layered material according to any of the preceding items, wherein the digital printable polymer is formed of a water- or solvent-based polymer solution.
Item 14 is a layered material according to any of the preceding items, wherein the digital printable polymer is selected from cross-linked or non-cross-linked polyester resins, polyurethane resins, polyester urethane resins, polyvinylbutyral resins, acrylic resins, methacrylic resins, polyvinyl chloride resins, acrylic-resin-methacrylic-resin-copolymers and any combinations or mixtures thereof.
Item 15 is a layered material according to any of the preceding items, wherein the digital printable polymer comprises the polymer reaction product of a precursor mixture comprising at least one hydroxy-functional polyester resin.
Item 16 is a layered material according to any of the preceding items, wherein the digital printable polymer comprises the polymer reaction product of a precursor mixture, comprising from 20 wt% to 70 wt%, based on the total weight of the precursor mixture, of at least one hydroxy-functional polyester resin and at least one cross-linking agent.
Item 17 is a layered material according to item 16, wherein the weight ratio between the at least one cross-linking agent and the at least one hydroxy-functional polyester resin is greater than or equal to 0.25.
Item 18 is a layered material according to any of items 8 to 18, wherein the at least one further layer comprises the polymer reaction product of a precursor mixture comprising at least one hydroxy-functional polyester resin.
Item 19 is a layered material according to any of items 8 to 19, wherein the at least one further layer comprises the polymer reaction product of a precursor mixture, comprising from 20 wt% to 70 wt%, based on the total weight of the precursor mixture, of at least one hydroxy-functional polyester resin and at least one cross-linking agent.
Item 20 is a layered material according to item 19, wherein the weight ratio between the at least one cross-linking agent and the at least one hydroxy-functional polyester resin is greater than or equal to 0.25.
Item 21 is a layered material according to any of the preceding items, wherein the layered material is a any of a label, a decorative film or a protective film.
Item 22 is a layered material according to any of the preceding items, wherein the layered material is any of a tamper evident label, a destructible label or a security label.
Item 23 is a label or decorative film or protective film, comprising a layered material according to any of the preceding items, wherein the label is digital printable or digital printed and irradiation markable or irradiation marked.
Item 24 is a label or decorative film or protective film according to item 23, wherein the label is irradiation markable or irradiation marked by irradiation ablation, and wherein the irradiation is preferably laser irradiation.
Item 25 is an article to which the layered material of any of items 1 to 22 or the label or decorative film or protective film according to item 23 or 24 has been adhered by the adhesive layer of the layered material, wherein the article is selected from the group consisting of fuel managing systems, engines, fuel reservoirs, bodies of vehicles or a component thereof.
Item 26 is a tamper evident and/or destructible label material comprising a polymer layer comprising the polymer reaction product of a precursor mixture comprising from 20 wt% to 70 wt%, based on the total weight of the precursor mixture, of at least one hydroxy-functional polyester resin, at least one cross-linking agent and at least one pigment.
Item 27 is a tamper evident and/or destructible label material according to item 26, wherein the cross-linking level is greater than or equal to 25 %.
Item 28 is a method of manufacturing a layered material according to any of items 1 to 22, which comprises the steps of:
   a) providing an ink receptive layer of a digital printable polymer comprising at least one pigment;
   b) applying an adhesive layer onto the ink receptive layer, and optionally, covering the adhesive layer with a release liner.
Item 29 is the use of a layered material according to any of items 1 to 22 or of a material according to claim 26 or 27 or of a digital printable polymer comprising at least one pigment in the preparation of a label or a decorative film or a protective film.

### EXAMPLES

The invention is further illustrated by the following examples. These examples are merely for illustrative purposes only and are not meant to be limiting on the scope of the appended claims.

### List of materials

### Poyester resin (saturated polyester)

Uralac CP 4079 SN ND (DSM Coating Resins Europe B.V. in the Netherlands) a saturated polyester resin, dissolved in solvent naphtha 61 % solids.

### Polyester urethane resin

Print Rite KK 25/163 by Lubrizol (UK).

Uralac 1049 CP by DSM Netherlands.

### PBA-PMMA-copolymer

MFR 1924 (Michelman, USA) a poly(n-buty)acrylate-poly(methyl)methacrylate-copolymer.

### Acrylic copolymer

Neocryl A-1127 (DSM NeoResins, The Netherlands), self-crosslinking acrylic copolymer emulsion, solids 44 % w/w.

### Crosslinking agent

Resimene 717 (INEOS Melamines GmbH, Germany), imino-type methylated melamine formaldehyde resin, 84 % solids in n-Butanol.

CX-100 (DSM Coating Resins, The Netherlands), Crosslinker trifunctional/polyfunctional aziridine cross-linker for polymers with reactive carboxyl functionality (for acrylic emulsion or urethane dispersions).

### Pigment (non-color-changing pigment)

Ti-Pure R-960 (DuPont, USA), rutile titanium dioxide pigment (TiO₂ pigment).

Isoversal LM 20389 (ISL-Chemie GmbH & Co. KG in Germany), carbon black paste.

Isoversal LM 0677 (ISL-Chemie GmbH & Co. KG in Germany), carbon black paste.

Isoversal 0449177 (ISL-Chemie GmbH & Co. KG in Germany), carbon black paste for aqueous systems.

Daxo Universalpasten WL 13 (SIL Lackfabrik GmbH & Co KG, Germany), black pigment paste for aqueous systems, 45 % solids, 25% pigment concentration.

Daxo 4 (SIL Lackfabrik GmbH & Co KG, Germany), carbon black paste, 25% solids.

Daxo LH (SIL Lackfabrik GmbH & Co KG, Germany), carbon black paste, 20% solids.

Luconyl White 0022 (BASF, Germany), white pigment.

Stapa Hydroxal 2W 4000 (ECKART, Germany), silver pigment paste for aqueous systems.

Stapa Hydroxyl W Chromal X Aluminum (ECKART, Germany), aluminum pigment paste.

### Release Carrier

3M-SCW 231, commercially available from 3M (USA).

### Pressure sensitive adhesive

3M Adhesive Transfer Tapes 966, thickness of about 60µm, commercially available from 3M (USA).

### Flow modifier

Premix Modaflow (Cytec Surface Specialties S.A./N.V., Belgium) an acrylic flow modifier, 20 % by weight in butylcarbitolacetate (BCB).

### Light stabilizer

Tinuvin 770 DF (BASF, Germany), UV-absorber.

### Antioxidant

Irganox 1076 (BASF Germany), phenolic primary antioxidant, sterically hindered phenolic antioxidant, octadecyl-3-(3,5-di-tert.butyl-4-hydroxyphenyl)-propionate.

### Heat stabilizer

Baerlocher UBZ 630TS (Baerlocher, Germany).

### Examples 1A to 1H, 2A to 2H and 3A to 3H

### Preparation of coating mixtures (WBC) for making a white multifunctional layer or base layer of layered material according to Examples 1E to 1H, 2A to 2D and 3A to 3D.

Table 1 shows the components (No. 1-9) and their amounts for making a white multifunctional layer or base layer (WBC) of the layered materials according to Examples 1E to 1H, 2A to 2D and 3A to 3D.

**Table 1: Mixture for making a white multifunctional layer or base layer (WBC).**

| No | | pph | Solid content | Solid amount |
|---|---|---|---|---|
| 1 | Butylcarbitolacetat | 5 | 0 | 0.00 |
| 2 | Xylol | 5 | 0 | 0.00 |
| 3 | Premix Modaflow | 1 | 20 | 0.11 |
| 4 | Tinuvin 770 DF | 1 | 100 | 0.54 |
| 5 | Irganox 1076 | 1 | 100 | 0.54 |
| 6 | Diethylethanolamine | 1 | 0 | 0.00 |
| 7 | Uralac CP 4079 SN ND | 100 | 61 | 33.15 |
| 8 | Resimene 717 | 35 | 84 | 15.98 |
| 9 | Ti-Pure R 960 | 35 | 89 | 16.93 |
| | Total | 184 | | 67.26 |

Components No.1 to 6 according to Table 1 are mixed and homogenized. Then component No.7 according to Table 1 is added and the mixture is homogenized. Then component No.8 according to Table 1 is added under stirring and the mixture is homogenized. Finally, component No.9 according to Table 1 is added under stirring and the mixture is homogenized for 30 minutes.

### Preparation of coating mixtures (BBC) for making a black multifunctional layer or base layer of layered material according to Examples 1A to 1D, 2E to 2E and 3E to 3E.

Table 2 shows the components (No 1-8) and their amounts for making a black multifunctional layer or base layer (BBC) of the layered materials according to Examples 1E to 1H, 2A to 2D and 3A to 3D.

**Table 2: Mixture for making a black multifunctional layer or base layer (BBC).**

| No | | pph | solid content | solid amount |
|---|---|---|---|---|
| 1 | Butylcarbitolacetate | 5 | 0 | 0.00 |
| 2 | Xylol | 5 | 0 | 0.00 |
| 3 | Baerlocher UBZ 630TS | 1 | 100 | 0.62 |
| 4 | Premix Modaflow | 1 | 20 | 0.12 |
| 5 | Uralac CP 4079 SN ND | 100 | 61 | 37.65 |
| 6 | Resimene 717 | 35 | 84 | 18.15 |
| 7 | Isoversal LM 20389 | 5 | 73,2 | 2.26 |
| 8 | Isoversal LM 0677 | 10 | 33,7 | 2.08 |
| | Total | 162 | | 60.88 |

Components No.1 to 4 according to Table 2 are mixed and homogenized. Then component No.5 according to Table 2 is added and the mixture is homogenized. Then component No.6 according to Table 2 is added under stirring and the mixture is homogenized. Finally, component No.7 and 8 according to Table 2 is added under stirring and the mixture is homogenized for 30 minutes.

### Examples 2A to 2H (dual layered material with white (WBC) or black (BBC) base layer and black (BTC) or silver (STC) top layer comprising non-color-changing pigments).

Table 4 shows the components and their amounts for making a black top coating mixture (Examples 2A to 2D) or a silver top coating mixture (Examples 2E to 2H). The components are mixed according to Table 4.

**Table 4: Coating mixtures for making a black (BTC) or silver (STC) colored top coat, values given in [g].**

| | 2A | 2B | 2C | 2D | 2E | 2F | 2G | 2H |
|---|---|---|---|---|---|---|---|---|
| Top layer | black | black | black | black | silver | silver | silver | silver |
| Base layer | white | white | white | white | black | black | black | black |
| Print Rite KK 25/163 | 22.00 | 22.00 | | | 100.00 | 100.00 | | |
| MFR 1924 | | | 10.00 | 10.00 | | | 15.00 | 15.00 |
| Neocryl A1127 | | | 10.00 | 10.00 | | | 15.00 | 15.00 |
| CX 100 | | | 0.38 | 0.38 | | | 0.50 | 0.50 |
| Isoversal 0449177 | 1.15 | | 1.10 | | | | | |
| Daxo WL No. 13 | | 1.52 | | 1.52 | | | | |
| Luconyl White 0022 | | | | | 5.60 | 5.6 | 5.60 | 5.6 |
| Stapa Hydroxal 2W 4000 | | | | | 10.80 | | 10.80 | |
| Stapa | | | | | | 10.80 | | 10.80 |
| Hydroxal W Chromal X Aluminum | | | | | | | | |
| Distillated water | | | | | | | 34 | 34 |

In Examples 2A to 2D dual layer layered materials with white base layers are formed of the white coating mixture (WBC) according to Table 1 and with black top layers formed of the black coating mixtures 2A to 2D according to Table 4.

In Examples 2E to 2H dual layer layered materials with black base layers are formed of the black coating mixture (BBC) according to Table 2 and with silver top layers formed of the silver coating mixtures 2E to 2H according to Table 4.

The black or silver top layers of the dual layer layered materials according to Examples 2A to 2H are UV-LED ink jet printed using a Roland LEC 330. Examples 2A to 2H show excellent UV-LED ink jet printability.

Examples 2A to 2H are marked by laser ablation of the black or silver top layers and exposing areas of the white or black base layers by using a Rofin Sinar Easy Mark 2. Examples 2A to 2H showed excellent contrast between the laser-ablated and non-laser-ablated areas.

### Examples 4A and 4B

### Preparation of coating mixtures (WBC1) for making a white multifunctional layer or base layer of layered material according to Examples 4A and 4B.

Table 5 shows the components (No.1-3) and their amounts for making a white multifunctional layer or base layer (WBC1) of the layered materials according to Examples 4A and 4B.

**Table 5: Mixture for making a white multifunctional layer or base layer (WBC1).**

| No | | pph | Solid content | Solid amount |
|---|---|---|---|---|
| 1 | Butylcarbitolacetat | 5 | 0 | 0.00 |
| 2 | Xylol | 5 | 0 | 0.00 |
| 3 | Premix Modaflow | 1 | 20 | 0.11 |
| 4 | Tinuvin 770 DF | 1 | 100 | 0.54 |
| 5 | Irganox 1076 | 1 | 100 | 0.54 |
| 6 | Diethylethanolamine | 1 | 0 | 0.00 |
| 7 | Uralac CP 4079 SN ND | 100 | 61 | 33.15 |
| 8 | Resimene 717 | 35 | 84 | 15.98 |
| 9 | Ti-Pure R 960 | 35 | 89 | 16.93 |
| | Total | 184 | | 67.26 |

Components No.1 to 6 according to Table 5 are mixed and homogenized. Then, component No.7 according to Table 5 is added and the mixture is homogenized. Then component No.8 according to Table 5 is added under stirring and the mixture is homogenized. Finally, component No.9 according to Table 5 is added under stirring and the mixture is homogenized for 30 minutes.

### Preparation of coating mixtures (WBC1) for making black top coat layers TC1 and TC2 of layered material according to Examples 4A and 4B.

Table 6 shows the components and their amounts for making top coat layers TC1 and TC2. The components are mixed according to Table 6.

**Table 6: Coating mixtures for black top coat layers TC1 and TC2, values given in [g].**

| | TC1 | ' TC2 |
|---|---|---|
| Uralac 1049 CP | 100.00 | 100.00 |
| CX 100 | 2.00 | 2.00 |
| Daxo 4 | 5.00 | |
| Daxo LH | | 5.00 |

### Examples 4A (dual layer label with white polyester resin base coat WBC1 and black top coat layer TC1).

Example 4A is prepared by coating top coat coating mixture TC1 onto a release carrier (3M-SCW 231) and drying the coating 2 minutes at 80 °C and 1 minute at 195 °C. Its thickness is about 8 µm after drying. Then, base coating mixture WBC1 is coated, with a thickness of about 50 µm, onto the pre-described dried top coat layer. Then, the layered system is dried 3 minutes at 195 °C. A 3M Transfer Tape 966 is then laminated onto the white base layer. Finally, the release carrier used in the first step of the production is removed.

### Example 4B (dual layer label with white polyester resin base coat WBC1 and black top coat layer TC2).

Example 4B is prepared by coating top coat coating mixture TC2 onto a release carrier (3M-SCW 231) and drying the coating 2 minutes at 80 °C and 1 minute at 195 °C. Its thickness is about 8 µm after drying. Then, base coating mixture WBC1 is coated, with a thickness of about 50 µm, onto the pre-described dried top coat layer. Then, the layered system is dried 3 minutes at 195 °C. A 3M Transfer Tape 966 is then laminated onto the white base layer. Finally, the release carrier used in the first step of the production is removed.

### Test Methods and Test Results

### A. Destructibility Test

The destructibility of Example 1 to 4 and Comparative Example 1 to 3 are tested according to VW-TL-52038, with the exception that the removing of test sample is performed manually. Applied substrates are: PE and aluminum, dwell 72hrs at 20°C and 50% r.h.

Examples 4A and 4B provide good destructibility properties.

### B. Printability and Snap Test (ink anchorage test)

The appearance and legibility of print image are visually observed and evaluated. No discontinuing printing image is allowed.

### B.1 Ink-Jet Print

Example 4A and 4B are ink-jet printed using a Roland LEC-330 printer, using LED uv-cured inks: cyan, magenta, yellow, black, blue, red, green.
Printing parameters: standard solution : 720x720 dpi; uni-directional.

### B.2 Laser marking

Examples 4A and 4B are laser marked using a Rofin Easymark II, Nd-YAG laser marking equipment.
Laser Marking parameters: Ampere 25A, frequency 15 kHz, speed 500 mm/s.

### B.3 Snap Test

The ink-jet printed Examples 4A and 4B and the laser marked Examples 4A and 4B are subjected to a snap test with 3M-Tape 610 (without cross-cut). No debonding of printed ink layer or laser marked layer is allowed.

All tested examples show good results in appearance and ink adhesion.

### C. Solvent Resistance Test

This test is performed according to the information sheet " Identification Labels" published in July 2007 and distributed by the Federal Motor Transport Authority in Germany (KBA, Kraftfahrt-Bundesamt in 24932 Flensburg, Germany). Thereby, the ink-jet printed Examples 4A and 4B and the laser marked Examples 4A and 4B are applied on aluminum-plate for 48hrs at 22°C before being subjected to solvent resistance test by immersion in solvent and fuel.

No debonding of printed ink-layer or laser marked layer and also strong swelling of test sample during test periode is allowed. Test samples have to be destructed and removed by using a razor blade after re-conditioning time of 48 hours.

The test samples are visually inspected for changes in the visibility of the markings. The results of the immersion solvent resistance test are given in Table 7.
Rating code: (+) Pass
(-) Fail

**Table 7: Immersion Solvent Resistance Test.**

| Sample | Immersion in Toluene required 15 min | Immersion in E 85 required 30 min | Immersion in mixture of 50% fuel, 30 % toluene and 20 % ethanol required 30 min |
|---|---|---|---|
| Example 4A laser marked | (+) | (+) | (+) |
| Example 4A digital ink j et | (+) | (+) | (+) |
| Example 4B laser marked | (+) | (+) | (+) |
| Example 4B digital ink j et | (+) | (+) | (+) |

### D. General Test Results

The layered materials of Example 4A and 4B provide good performance in all tests, e.g. destructibility, printability, laser marking, ink-bonding, chemical resistance to aggressive solvent and fuel even against aggressive fuel mixture of 50 % fuel, 30 % toluene and 20 % ethanol at 30 min dwell.

## Claims

1. A layered material, comprising:
a) an ink receptive layer (1) of a digital printable polymer comprising at least one pigment (1a); and
b) an adhesive layer (2).

2. A layered material according to claim 1, wherein the digital printable polymer is printable by any printing technique selected from the group of ink-jet printing, laser toner printing, thermal transfer printing, and any combinations thereof.

3. A layered material according to any of claim 1 or 2, wherein the digital printable polymer is an ink-jet printable polymer.

4. A layered material according to any of the preceding claims, wherein the ink receptive layer is digital printable or digital printed and irradiation markable or irradiation marked.

5. A label or decorative film or protective film according to claim 4, wherein the ink receptive layer is irradiation markable or irradiation marked by irradiation ablation, and wherein the irradiation is preferably laser irradiation.

6. A layered material according to any of the preceding claims, wherein the digital printable polymer comprises at least one non-color-changing pigment (1a).

7. A layered material according to any of the preceding claims, wherein the ink receptive layer (1) is arranged on the adhesive layer (2) and is likewise the top layer of the layered material.

8. A layered material according to any of the preceding claims, wherein the ink receptive layer (1) is the top layer of the layered material, wherein the layered material comprises at least one further layer (4) being arranged between the ink receptive layer (1) and the adhesive layer (2) of the layered material.

9. A layered material according to any of claim 7 or 8, wherein the at least one further layer (4) comprises a coloring additive set, wherein the color of the at least one further layer (4) comprising the coloring additive set is different from the color of the digital printable polymer of the ink receptive layer (1) in the non-irradiation-treated state and/or in the irradiation-treated state.

10. A layered material according to claim 9, wherein the irradiation is laser irradiation.

11. A layered material according to any of the preceding claims, wherein the digital printable polymer is formed of a water- or solvent-based polymer solution.

12. A layered material according to any of the preceding claims, wherein the digital printable polymer is selected from cross-linked or non-cross-linked polyester resins, polyurethane resins, polyester urethane resins, polyvinylbutyral resins, acrylic resins, methacrylic resins, polyvinyl chloride resins, acrylic-resin-methacrylic-resin-copolymers and any combinations or mixtures thereof.

13. A layered material according to any of the preceding claims, wherein the layered material is a any of a label, a decorative film or a protective film.

14. A method of manufacturing a layered material according to any of claims 1 to 13, which comprises the steps of:
a) providing an ink receptive layer (1) of a digital printable polymer comprising at least one pigment (1a);
b) applying an adhesive layer onto the ink receptive layer (1), and optionally, covering the adhesive layer with a release liner.

15. Use of a layered material according to any of claims 1 to 13 or of a digital printable polymer comprising at least one pigment (1a) in the preparation of a label or a decorative film or a protective film.
